# EUROPEAN PATENT SPECIFICATION

(11) **EP 3 193 064 B1**
(45) Date of publication and mention of the grant of the patent: **13.03.2019**
(21) Application number: 16151419.5
(22) Date of filing: 15.01.2016
(51) Int. Cl.: F16K 41/04, F16K 43/00, F16K 1/52, F24D 19/10, F16K 27/02, G05D 23/02, F16J 15/06

(54) **VALVE**
VENTIL
VANNE

(43) Date of publication of application: 19.07.2017
(73) Proprietor: Danfoss A/S, 6430 Nordborg (DK)
(72) Inventor: Clausen, Anders Østergaard, 8680 Ry (DK); Hesseldahl, Søren, 7182 Bredsten (DK)
(74) Representative: Keil & Schaafhausen Patent- und Rechtsanwälte PartGmbB

(56) References cited:
- EP-A2- 1 959 202
- DE-A1- 10 305 394
- DE-U1-202013 001 405

## Description

The invention relates to a valve comprising a valve housing, a valve seat and a valve element, wherein the valve element is displaceable relative to the housing along an axis towards the valve seat, wherein the valve seat is arranged in a valve seat member, wherein the valve seat member is rotatable around the axis to change the maximum effective flow cross section through the valve and the valve comprises an insert, wherein the valve seat member is rotatably arranged in the insert.

A valve of this kind is for example known from DE 103 05 394 A1.

A further valve is for example known from DE 33 00 624 A1. Therein a thermostat valve for the use with a heating circuit is known. The valve comprises a presetting mechanism which allows to rotate an insert by rotating a handle. The insert comprises a sleeve with a variable height and an opening. By rotating the insert the effective flow cross section through the valve can be changed.

In valves of the above kind the valve seat is part of the housing which makes it difficult to change the flow characteristics through the valve. Furthermore, the presetting mechanism has a limited functionality because it depends on a cooperation between the housing and an insert.

DE 20 2013 001 405 U1 describes a control valve insert which can be inserted into a pipe to control the flow of fluid through a radiator. The valve seat is part of an insert. Presetting means are rotatably arranged within the housing.

EP 1 959 202 A2 describes a thermostatic control device for radiator valves which can be used in connection with a valve as described at the outset.

The task of the invention is therefore to provide a valve of the kind mentioned at the outset which has an improved functionality.

According to the present invention the above task is solved in that the valve seat member is rotatable around the axis of displacement of the valve element to change the maximum effective flow cross section through the valve and in that the valve seat member is rotatably arranged in the insert.

This solution has the advantage that it is easier to change the flow characteristics through the valve since the valve seat is no longer part of the housing but is arranged in a valve seat member. Preferably, the valve seat member is a one piece member. It is also not necessary that the valve seat member is directly fixed to the housing, but it can be indirectly connected to the housing, for example, through an additional insert and/or a valve top. By rotating the valve seat member around the axis the maximum effective flow cross section through the valve can be adjusted, whereby the pressure dependent maximum fluid flow through the valve is changed. The actual flow of fluid through the valve is, however, not only pressure dependent but also depends on the relative position of the valve element to the valve seat. Rotating the valve seat member will, however, change the presetting of the valve and thereby limit or increase the maximum fluid flow through the valve. This embodiment allows for a large variety of different presetting options. Preferably, the valve seat is an integral part of the valve seat member.

This embodiment has the advantage that the housing can have a relatively simple shape and the presetting mechanism can be controlled by the relative rotational position between the valve seat member and the insert. In this embodiment both the valve seat member and the insert can be made from a plastic material.

In a preferred embodiment both the valve seat member and the insert have a hollow cylinder-like shape. This is a relatively simple way to ensure that the valve seat member and the insert can be rotated relative to one another. The valve seat can in this embodiment be arranged in an axial end region of the valve seat member, preferably at an inner surface of the valve seat member.

Alternatively the valve seat member and/or the insert can have a cone-like shape, for example a hollow cone-like shape.

It is preferred if the overlap of the first opening and the second opening is changeable by rotating the valve seat member around the axis. By rotating the valve seat member around the axis the maximum effective flow cross section through the valve can be changed.

It is preferred if the first opening has a contour with an axial height that is variable in the circumferential direction around the axis. The axial height of the contour here denotes the extend of the first opening in the axial direction. The contour of the first opening can on one axial end of the first opening be perpendicular to the axis A and on an opposite axial end of the first opening be inclined with a constant or variable angle relative to the axis A. Alternatively, both axial ends of the first opening can be inclined relative to the axis A with a constant or a variable angle. This allows for a large variety of presetting options for the maximum effective flow cross section through the valve. In particular, this allows to have a resulting fluid flow through the valve be more linear depending on the rotational position of the valve seat member.

It is preferred if the second opening has a contour with an axial height that is variable in the circumferential direction around the axis. In this embodiment, preferably, both the first opening and the second opening have a contour with an axial height that is variable in the circumferential direction around the axis.

It is preferred if the valve comprises a presetting handle, wherein rotating the presetting handle rotates the valve seat member.

It is preferred if the valve comprises a valve top insert that is on one axial end connected to the presetting handle and on the opposite axial end connected to the valve seat member. The valve top insert in this embodiment can guide a pin and/or a stem of the valve one of which is connected to the valve element.

It is preferred if the valve comprises an inspection window, wherein the inspection window allows to observe the current rotational position of the valve seat member from outside the valve. This embodiment has the advantage that the presetting position of the valve seat member is easier to observe from an outside, in particular if a valve attachment like a thermostatic actuator is already attached to the valve. The chosen presetting handle is in many cases no longer visible if a valve attachment like a thermostatic actuator is mounted on the valve and the presetting can thus not be observed. This problem is overcome by using an inspection window which allows to observe the rotational position of the valve seat member directly. Inspection window does not necessarily mean that a transparent wall is present but the inspection window may simply take the shape of an aperture in the valve through which the valve seat member can be observed.

It is preferred if the valve comprises a valve top, wherein the inspection window is arranged in the valve top. The valve top can in this embodiment hold the valve seat member and/or the valve top insert in the housing. The presetting handle can be arranged at one axial end of the valve top opposite to the housing.

It is preferred if the valve comprises a connection geometry for connecting a valve attachment to the valve, wherein the connection geometry is arranged at a larger axial distance from the valve seat than the inspection window. This embodiment ensures that even if a valve attachment is connected to the connection geometry the inspection window is still observable which allows to see the chosen presetting of the valve from an outside. In particular, when the valve is undergoing maintenance it is not necessary to move the valve attachment to check if the valve has the correct presetting.

Preferred embodiments of the invention will now be described with reference to the figures, wherein:
- Fig. 1: shows a cut view of a valve according to a first embodiment of the invention,
- Fig. 2: shows an enlarged view of the valve shown in Fig. 1,
- Fig. 3: shows an isometric cut view of a valve according to the first embodiment of the invention,
- Fig. 4: shows an enlarged view of the valve according to Fig. 3,
- Fig. 5: shows a cut view of a valve according to a second embodiment,
- Fig. 6: shows an enlarged view of a valve according to Fig. 5.

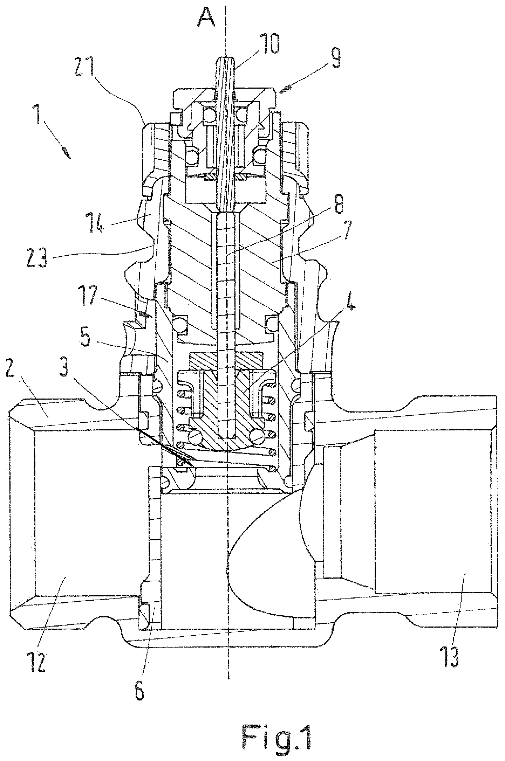

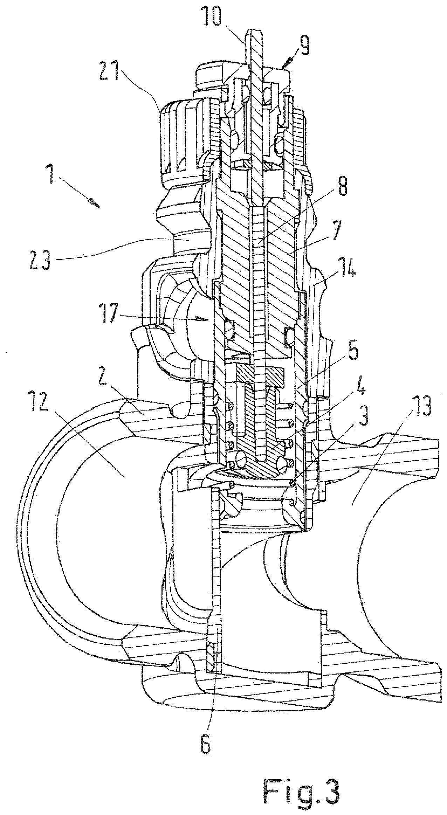

Fig. 1 to 4 show a first embodiment of a valve 1 according to the invention which is a radiator valve or a valve for another heat exchanger for heating or cooling purposes. The valve 1 comprises a housing 2 in which an inlet 13 as well as an outlet 12 are arranged. The valve 1 comprises a valve seat 3 that cooperates with a valve element 4 to throttle or stop a fluid flow through the valve. The valve seat is arranged in a valve seat member 5 that has a hollow cylinder-like shape. The valve seat 3 is arranged at one axial end of the valve seat member 5. The valve seat 3 is in particular arranged at an inner surface of the valve seat member 5.

The valve element 4 is arranged at one axial end of a stem 8. The stem 8 as well as the valve element 4 can be axially displaced along an axis A to throttle or close the valve 1. Axial in the context of this application refers to the direction along the opening or closing axis A of the valve 1. At the axial end of the stem 8 opposite to the valve element 4 a pin 10 of a stuffing box 9 is arranged. The stem 8 is guided in a valve top insert 7. The valve top insert 7 is held inside the housing by a valve top 14. The valve top 14 can be connected to the housing 2, for example by a snap-in connection. The latter is advantageous if the valve top 14 is made from a plastic material while the housing 2 is made from a metal.

The valve 1 may comprise a thermostatic actuator or a similar valve attachment which is for simplicity not shown in the Fig. 1 to 6. However, the thermostatic actuator may, for example, be attached to the valve top 14 via a connection geometry 23. The thermostatic actuator may engage the pin 10 to actuate the valve element 4. The connection geometry 23 is arranged at a larger axial distance from the valve seat 3 than an inspection window 17. The inspection window 17 is arranged in the valve top 14 to allow an inspection of the current rotational position of the valve seat member 5. This way, one may inspect the presetting. Additionally, the inspection window 17 can also be used to check the current axial position of the valve seat member 5 in case the valve seat member 5 is axially displaceable.

The valve seat member 5 is rotatable around the axis A to change the maximum effective flow cross section through the valve 1. The valve seat member 5 is rotatably arranged in an insert 6 of the valve 1. The insert 6 has a hollow cylinder-like shape.

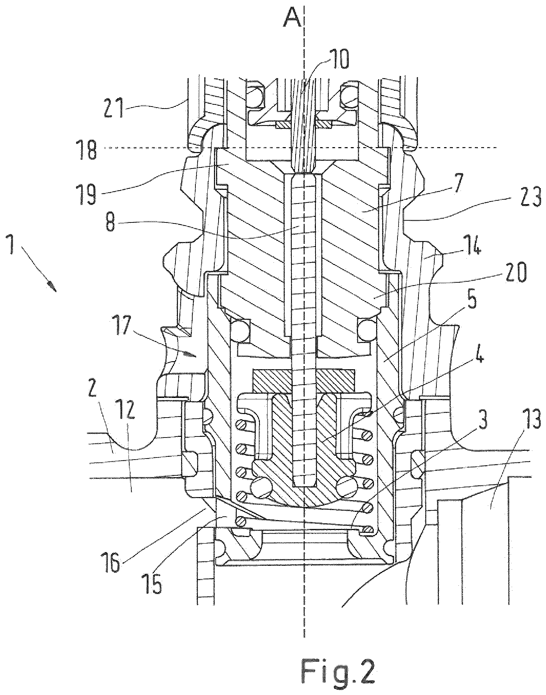

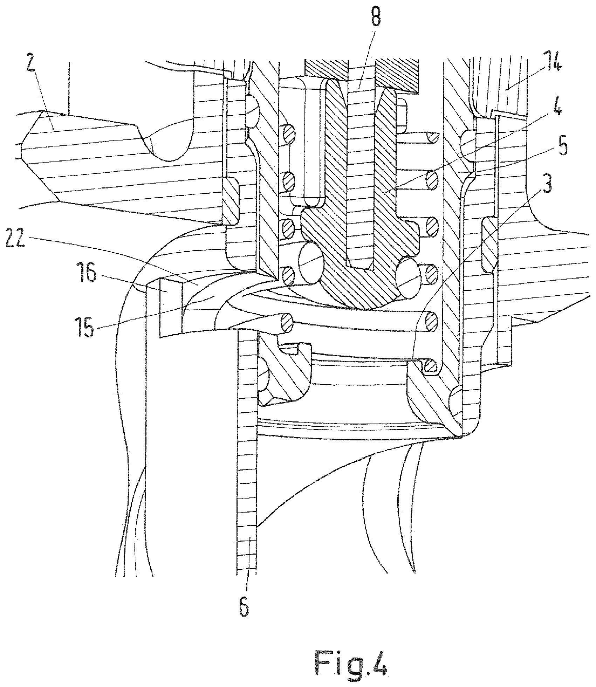

Referring to the enlarged view of Fig. 2 and 4 the valve seat member 5 also comprises a first opening 15. Similarly, the insert 6 comprises a second opening 16. In Fig. 2 and 4 the first opening 15 and the second opening 16 are aligned in the axial direction as well as rotationally. In this relative position of the first opening 15 and the second opening 16 fluid coming from the valve seat 3 can pass the first opening 15 and then the second opening 16 to reach the outlet 12. The overlap of the first opening 15 and the second opening 16 is changeable by rotating the valve seat member 5 around the axis A. To this end, the first opening 15 has a contour 22 with an axial height that is variable in the circumferential direction around the axis A. Alternatively or additionally, the second opening 16 could also have contour with an axial height that is variable in the circumferential direction around the axis A. The presetting of the valve may be changed by rotating a presetting handle 21 which will also rotate the valve seat member 5. Between the presetting handle 21 and the valve seat member 5 a valve top insert 7 is arranged. On one axial of the valve top insert 7 it is connected with the valve seat member 5. On the opposite end of the valve top insert 7 it is connected to the presetting handle 21. The inspection window 17 allows to observe the current rotational position of the valve seat member 5 from an outside of the valve 1. In particular, even if a valve attachment is connected to the connection geometry 23 one may still observe the inspection window 17 and consequently the rotational position of the valve seat member 5. Thereby, if a maintenance of the valve is performed the person inspecting the valve is able to check the presetting of the valve without removing the valve attachment which covers the presetting handle 21.

Thermostatic actuators in the state of the art however have the disadvantage that they are often heated above the momentary room temperature by the direct contact to the valve which is heated by the heating fluid. Since the heating fluid usually has a temperature far above the room temperature the thermostatic actuator will in many cases also be heated to a higher temperature than the room temperature. Thermostatic actuators are usually arranged to reduce the flow through the valve when the temperature of the thermostatic actuator increases such that the valve does not need to be manually readjusted once a desired temperature has been reached. However, since the thermostatic actuator will in many cases be heated to a too high temperature not corresponding to the actual room temperature the thermostatic actuator will often close the valve too far compared to the actual room temperature that has been reached. According to the present invention the valve seat can now also be displaced relative to the housing parallel to the closing direction of the valve element 4 towards the valve seat 3. Preferably, this is achieved by at least one thermoactive member in the valve which can expand or elongate and thus displace the valve seat 3.

In the first embodiment according to Fig. 1 to 4 a thermoactive member is the valve seat member 5. The valve seat member 5 to this end is only fixed to the valve top insert 7 at the axial end of the valve seat member 5 opposite to the valve seat 3. This way, when the valve seat member 5 thermally elongates under a temperature increase the valve seat 3 will be displaced in a direction away from the valve element 4 whereby the flow through the valve is increased. However, since this effect is preferably smaller than the readjustment of the opening degree of the valve by an attached thermostatic actuator the overall effect of a temperature increase will still be that the valve element 4 will be moved closer to the valve seat 3. However, in the view according to Fig. 1 to 4 both the valve seat 3 as well as the valve element 4 would be displaced downwards in this case.

A further effect that has to be taken into account is of course that also the stem 8 as well as the pin 10 will to some degree thermally expand and elongate under a temperature increase. Therefore, preferably the valve seat member 5 elongates by a larger distance under a temperature increase than the stem 8. In case both a stem 8 as well as a pin 10 are used it is preferred if the valve seat member 5 elongates by a larger distance under a temperature increase than that of the stem 8 and the pin 10 combined. This can be achieved by choosing a material for the valve seat member 5 that has a larger coefficient of thermal expansion than that of the stem 8 and the pin 10.

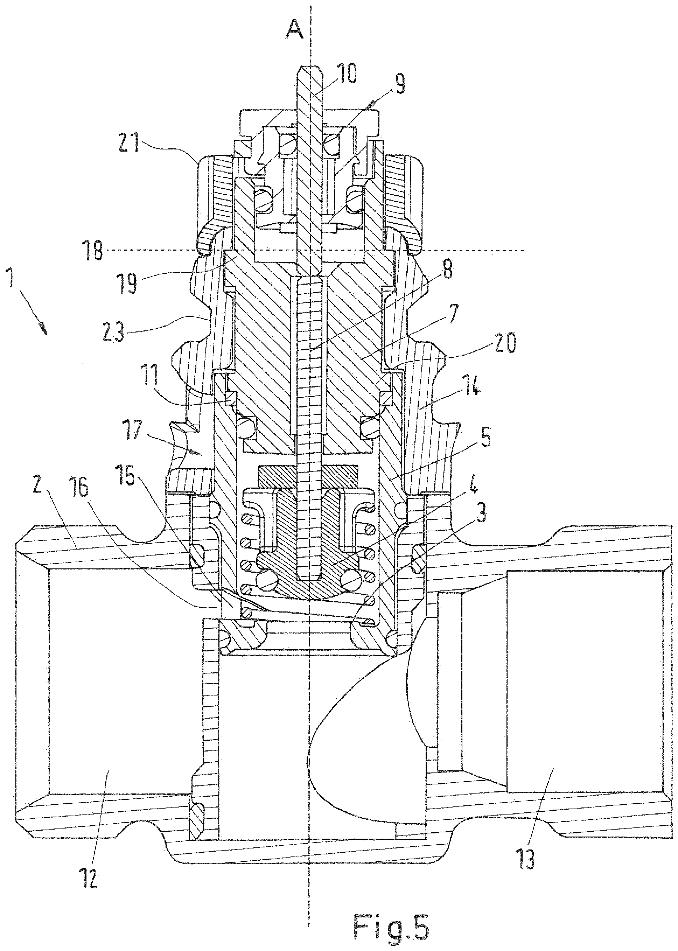

The axial elongation of the valve top insert 7 and the valve seat member 5 under a temperature increase can be defined with respect to a reference plane 18 shown in Fig. 2 and 5. The valve top insert 7 abuts the valve top 14 at the reference plane 18 with a rim 19. At an axial end 20 of the valve top insert 7 the valve top insert 7 abuts the valve seat member 5. Consequently, a thermal elongation of the valve top insert 7 with respect to the reference plane 18 leads to a displacement of the valve seat member 5 displacing the valve seat 3 away from the valve element 4. This effect adds to the thermal elongation of the valve seat member 5 itself which also displaces the valve seat 3 away from the reference plane 18. The valve seat member 5 and the valve top insert 7 are joined such that their combined elongation under a temperature increase moves the valve seat 3 away from the reference plane 18. The axial displacement of the valve seat 3 with respect to the reference plane 18 thus depends on the hinged movement of the valve top insert 7 and the valve seat member 5.

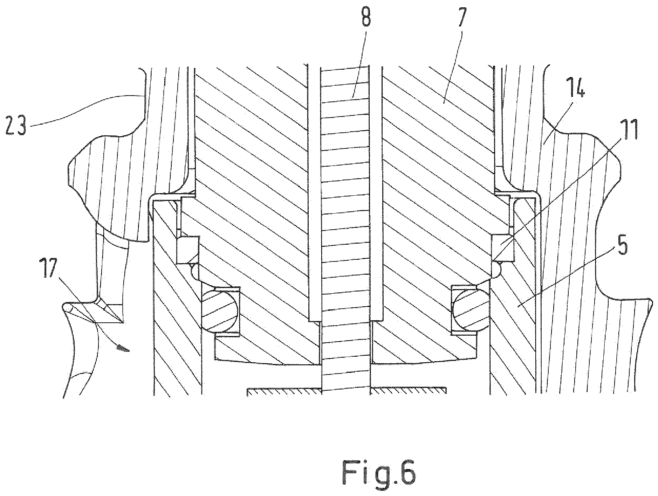

Fig. 5 and 6 show a slightly different second embodiment of the invention. Corresponding features are denoted with the same reference signs. The second embodiment only differs in the use of a dedicated thermoactive member 11. Preferably, the thermoactive member 11 has the shape of a wax ring, but it may also be a shape memory alloy actuator. The position of the thermoactive member 11 can be seen in detail in Fig. 6. The thermoactive member 11 is arranged at an axial end of the valve seat member 5 opposite to the valve seat 3. The thermoactive member 11 preferably abuts the valve seat member 5 as well as the valve top insert 7. Using a dedicated thermoactive member 11 has the advantage that the choice of materials in particular for the valve seat member 5 is broader. In particular, it is not necessary in this case that the coefficient of thermal expansion of the valve seat member 5 is much larger than the coefficient of thermal expansion of the stem 8 or the pin 10 in order to achieve a net relative displacement of the valve seat 5 relative to the valve element 4 under a temperature increase in the valve interior. However, in Fig. 1 to 4 the valve seat member 5 has the role of a thermoactive member with a large coefficient of thermal expansion. Nevertheless, both a dedicated thermoactive member 11 as well as a thermoactive member with additional functions like the valve seat member 5 may be used to achieve an overall increase of the distance of the valve seat 3 and the valve element 4 due to a temperature increase in the valve. As said before, the combined effect of the thermal expansion inside the valve 1 and the readjustment due to an attached valve attachment should however always result in a throttling of the flow through the valve under a temperature increase.

## Claims

1. A valve (1) comprising a valve housing (2), a valve seat (3) and a valve element (4), wherein the valve element (3) is displaceable relative to the housing (2) along an axis (A) towards the valve seat (3), the valve seat (3) is arranged in a valve seat member (5), and the valve (1) comprises an insert (6), wherein the valve seat member (5) comprises a first opening (15) and the insert (6) comprises a second opening (16), wherein an overlap of the first opening (15) and the second opening (16) determines the maximum effective flow cross section through the valve (1), **characterized in that** the valve seat member (5) is rotatable around the axis (A) to change the maximum effective flow cross section through the valve and **in that** the valve seat member (5) is rotatably arranged in the insert (6).

2. The valve according to claim 1, **characterized in that** both the valve seat member (5) and the insert (6) have a hollow cylinder-like shape.

3. The valve according to claim 1 or 2, **characterized in that** the overlap of the first opening (15) and the second opening (16) is changeable by rotating the valve seat member (5) around the axis (A).

4. The valve according to any of claims 1 to 3, **characterized in that** the first opening (15) has a contour (22) with an axial height that is variable in the circumferential direction around the axis (A).

5. The valve according to any of claims 1 to 4, **characterized in that** the second opening (16) has a contour with an axial height that is variable in the circumferential direction around the axis (A).

6. The valve according to any of claims 1 to 5, **characterized in that** the valve (1) comprises a presetting handle (21), wherein rotating the presetting handle (21) rotates the valve seat member (5).

7. The valve according to claim 6, **characterized in that** the valve comprises a valve top insert (7) that is on one axial end connected to the presetting handle (21) and on the opposite axial end connected to the valve seat member (5).

8. The valve according to any of claims 1 to 7, **characterized in that** the valve (1) comprises an inspection window (17), wherein the inspection window (17) allows to observe the current rotational position of the valve seat member (5) from outside the valve (1).

9. The valve according to claim 8, **characterized in that** the valve (1) comprises a valve top (14), wherein the inspection window is arranged in the valve top (14).

10. The valve according to claim 8 or 9, **characterized in that** the valve (1) comprises a connection geometry (23) for connecting a valve attachment to the valve (1), wherein the connection geometry (23) is arranged at a larger axial distance from the valve seat (3) than the inspection window (17).

## Patentansprüche

1. Ventil (1), aufweisend ein Ventilgehäuse (2), ein Ventilsitz (3) und ein Ventilelement (4), wobei das Ventilelement (4) in Bezug auf das Gehäuse (2) entlang einer Achse (A) in Richtung auf den Ventilsitz (3) verschiebbar ist, der Ventilsitz (3) in einem Ventilsitzelement (5) angeordnet ist,
und das Ventil (1) einen Einsatz (6) aufweist, wobei das Ventilsitzelement (5) eine erste Öffnung (15) aufweist und der Einsatz (6) eine zweite Öffnung (16) aufweist, wobei eine Überlappung der ersten Öffnung (15) und der zweiten Öffnung (16) den maximalen effektiven Durchflussquerschnitt durch das Ventil (1) bestimmt,
**dadurch gekennzeichnet ist, dass** das Ventilsitzelement (5) um die Achse (A) drehbar ist, um den maximalen effektiven Durchflussquerschnitt durch das Ventil zu ändern, und dass das Ventilsitzelement (5) drehbar in dem Einsatz (6) angeordnet ist.

2. Ventil nach Anspruch 1, **dadurch gekennzeichnet, dass** sowohl das Ventilsitzelement (5) als auch der Einsatz (6) eine hohle zylinderartige Form aufweisen.

3. Ventil nach Anspruch 1 oder 2, **dadurch gekennzeichnet, dass** die Überlappung der ersten Öffnung (15) und der zweiten Öffnung (16) durch Drehen des Ventilsitzelements (5) um die Achse (A) veränderbar ist.

4. Ventil nach einem der Ansprüche 1 bis 3, **dadurch gekennzeichnet, dass** die erste Öffnung (15) eine Kontur (22) mit einer axialen Höhe aufweist, welche in der Umfangsrichtung um die Achse (A) herum variabel ist.

5. Ventil nach einem der Ansprüche 1 bis 4, **dadurch gekennzeichnet, dass** die zweite Öffnung (16) eine Kontur mit einer axialen Höhe aufweist, welche in Umfangsrichtung um die Achse (A) herum variabel ist.

6. Ventil nach einem der Ansprüche 1 bis 5, **dadurch gekennzeichnet, dass** das Ventil (1) eine Voreinstellhandhabe (21) aufweist, wobei Drehen der Voreinstellhandhabe (21) das Ventilsitzelement (5) dreht.

7. Ventil nach Anspruch 6, **dadurch gekennzeichnet, dass** das Ventil einen oberen Ventileinsatz (7) aufweist, welcher an einem axialen Ende mit der Voreinstellhandhabe (21) und an dem gegenüberliegenden axialen Ende mit dem Ventilsitzelement (5) verbunden ist.

8. Ventil nach einem der Ansprüche 1 bis 7, **dadurch gekennzeichnet, dass** das Ventil (1) ein Sichtfenster (17) aufweist, wobei das Sichtfenster (17) es ermöglicht, die aktuelle Drehposition des Ventilsitzelements (5) von außerhalb des Ventils (1) zu überwachen.

9. Ventil nach Anspruch 8, **dadurch gekennzeichnet, dass** das Ventil (1) einen Ventilaufsatz (14) aufweist, wobei das Sichtfenster in dem Ventilaufsatz (14) angeordnet ist.

10. Ventil nach Anspruch 8 oder 9, **dadurch gekennzeichnet, dass** das Ventil (1) eine Verbindungsgeometrie (23) aufweist, um eine Ventilbefestigung mit dem Ventil (1) zu verbinden, wobei die Verbindungsgeometrie (23) in einem größeren axialen Abstand von dem Ventilsitz (3) als das Sichtfenster (17) angeordnet ist.

## Revendications

1. Vanne (1) comprenant un boîtier (2) de vanne, un siège (3) de vanne et un élément de vanne (4), l'élément de vanne (4) pouvant être déplacé par rapport au boîtier (2) le long d'un axe (A) vers le siège (3) de vanne, le siège (3) de vanne étant disposé dans un élément (5) de siège de vanne et la vanne (1) comprenant un insert (6), l'élément (5) de siège de vanne comprenant une première ouverture (15) et l'insert (6) comprenant une seconde ouverture (16), un chevauchement de la première ouverture (15) et de la seconde ouverture (16) déterminant la section transversale d'écoulement efficace maximale à travers la vanne (1), **caractérisée en ce que** l'élément (5) de siège de vanne peut tourner autour de l'axe (A) pour modifier la section transversale d'écoulement efficace maximale à travers la vanne et **en ce que** l'élément (5) de siège de vanne est disposé de manière rotative dans l'insert (6).

2. Vanne selon la revendication 1, **caractérisée en ce que** l'élément (5) de siège de vanne et l'insert (6) ont tous deux une forme de cylindre creux.

3. Vanne selon la revendication 1 ou 2, **caractérisée en ce que** le chevauchement de la première ouverture (15) et de la seconde ouverture (16) peut être modifié par la rotation de l'élément (5) de siège de vanne autour de l'axe (A).

4. Vanne selon l'une quelconque des revendications 1 à 3, **caractérisée en ce que** la première ouverture (15) a un contour (22) ayant une hauteur axiale qui est variable dans la direction circonférentielle autour de l'axe (A).

5. Vanne selon l'une quelconque des revendications 1 à 4, **caractérisée en ce que** la seconde ouverture (16) a un contour ayant une hauteur axiale qui est variable dans la direction circonférentielle autour de l'axe (A).

6. Vanne selon l'une quelconque des revendications 1 à 5, **caractérisée en ce que** la vanne (1) comprend une poignée de préréglage (21), la rotation de la poignée de préréglage (21) faisant tourner l'élément (5) de siège de vanne.

7. Vanne selon la revendication 6, **caractérisée en ce que** la vanne comprend un insert (7) de partie supérieure de vanne qui est relié au niveau d'une extrémité axiale à la poignée de préréglage (21) et au niveau de l'extrémité axiale opposée à l'élément (5) de siège de vanne.

8. Vanne selon l'une quelconque des revendications 1 à 7, **caractérisée en ce que** la vanne (1) comprend une fenêtre d'inspection (17), la fenêtre d'inspection (17) permettant d'observer la position de rotation actuelle de l'élément (5) de siège de vanne à partir de l'extérieur de la vanne (1).

9. Vanne selon la revendication 8, **caractérisée en ce que** la vanne (1) comprend une partie supérieure (14) de vanne, la fenêtre d'inspection étant disposée dans la partie supérieure (14) de vanne.

10. Vanne selon la revendication 8 ou 9, **caractérisée en ce que** la vanne (1) comprend une géométrie de raccordement (23) pour raccorder une fixation de vanne à la vanne (1), la géométrie de raccordement (23) étant disposée à une distance axiale plus grande du siège (3) de vanne que la fenêtre d'inspection (17).
